# FASCICULE DE BREVET EUROPEEN

(11) **EP 3 899 756 B1**
(45) Date de publication et mention de la délivrance du brevet: **28.01.2026**
(21) Numéro de dépôt: 19829511.5
(22) Date de dépôt: 18.12.2019
(51) Int. Cl.: G06F 16/903, G06F 21/62

(54) **PROCÉDÉ ET SYSTÈME D'OPTIMISATION DE CONTRÔLE D'ACCÈS**
VERFAHREN UND SYSTEM ZUR OPTIMIERUNG DER ZUGRIFFSSTEUERUNG
METHOD AND SYSTEM FOR OPTIMIZING ACCESS CONTROL

(30) Priorité: 18.12.2018 FR 1873130
(43) Date de publication de la demande: 27.10.2021
(73) Titulaire: THALES, 92400 Courbevoie (FR)
(72) Inventeur: DANGERVILLE, Cyril, 91767 Palaiseau (FR)
(74) Mandataire: Lavoix
(86) Numéro de dépôt international: PCT/EP2019/085821
(87) Numéro de publication internationale: WO 2020/127400

(56) Documents cités:
- ROBERT GRIMM ET AL: "Na Kika: Secure Service Execution and Composition in an Open Edge-Side Computing Network", USENIX,, 3 May 2006 (2006-05-03), pages 1 - 14, XP061010648
- ROBERTO BAYARDO ET AL: "Merkle tree authentication of HTTP responses", INTERNATIONAL WORLD WIDE WEB CONFERENCE, 10 May 2005 (2005-05-10), XX, pages 1182 - 1183, XP055624918, ISBN: 978-1-59593-051-4, DOI: 10.1145/1062745.1062929

## Description

La présente invention concerne un procédé et un système de contrôle d'accès à base de requêtes multi-attributs, pour l'accès à une partie d'un système informatique, le contrôle d'accès permettant d'autoriser ou de refuser un accès à un émetteur de requête en fonction de valeurs d'attributs contenus dans la requête.

L'invention se situe dans le domaine de la sécurisation des systèmes informatiques.

Dans de nombreux domaines d'application il est nécessaire de contrôler l'accès des utilisateurs ou des applications distantes à des systèmes et des services informatiques, afin de protéger des données confidentielles et d'éviter les éventuels piratages.

On connaît, dans le domaine de la sécurisation des systèmes informatiques, le contrôle d'accès basé sur les attributs, également appelé ABAC pour « Attribute-based Access Control », qui définit un contrôle d'accès basé sur un ensemble de règles d'accès formant une politique d'accès, en anglais « access policy », définissant des règles d'accès à des parties de système informatique associées à des ressources en fonction de valeurs d'attributs (par exemple des attributs d'utilisateurs, attributs associés aux ressources, des attributs d'action, des attributs d'environnement), d'opérations sur les attributs pour former des prédicats et d'opérateurs logiques, tels que la conjonction (opérateur booléen ET) ou la disjonction logique (opérateur booléen OU), appliqués sur les prédicats. Il est ainsi possible de définir des règles d'accès complexes et conditionnelles à divers contextes. Dans le reste du document, on désignera donc par *politique d'accès* l'ensemble des règles d'accès susmentionnées, sachant qu'une *politique d'accès* peut elle-même contenir des *politiques d'accès (sous-politiques)* ou faire appel à d'autres *politiques via* des références, et récursivement dans les deux cas.

Le contrôle d'accès ABAC a pallié les limitations du contrôle d'accès basé sur le rôle des utilisateurs (ou RBAC pour « Role-Based Access Control ») qui définissait des privilèges d'accès uniquement en fonction du rôle de l'utilisateur émetteur d'une requête, par exemple administrateur d'un système informatique, utilisateur principal ou utilisateur invité. En effet, le contrôle d'accès ABAC permet d'accorder des accès en fonction du contexte. Par exemple, il est possible de définir une règle permettant à un utilisateur (le sujet, par exemple un médecin) d'accéder à un fichier (la ressource, par exemple un dossier médical) associé à une personne (par exemple un patient) si et seulement si une relation donnée entre l'utilisateur et la personne est vérifiée (par exemple, la personne est patient du médecin). Ainsi, le contrôle d'accès ABAC permet de définir et vérifier des politiques d'accès complexes, mais induit également une complexité calculatoire dans l'évaluation de ces politiques.

Un des standards d'implémentation du contrôle d'accès basé sur les attributs est le langage XACML (pour « eXtensible Access Control Markup Language »), standardisé par OASIS (« Organization for the Advancement of Structured Information Standards »), qui définit une architecture et un langage pour exprimer une politique d'accès et pour spécifier des requêtes d'accès et des réponses.

Une requête d'accès contient un ensemble d'attributs informant sur le contexte d'une tentative d'accès à une ressource protégée, c'est-à-dire des informations sur le sujet à l'origine de la tentative, la ressource demandée, l'opération demandée, etc. Autrement dit en termes simples : qui tente de faire quoi sur quoi/qui et dans quelles circonstances ? La réponse d'accès consiste essentiellement en une décision d'autorisation (permise ou refusée), accompagnée éventuellement d'ordres ou recommandations destinées au module appliquant la décision - *PEP -* tel que décrit dans le paragraphe suivant.

L'architecture XACML v3.0 comprend plusieurs types de modules, également appelés points : un point de décision PDP (pour « Policy Decision Point »), qui est un point de décision centralisé, adapté à communiquer avec des points de vérification distribués ou PEP pour « Policy Enforcement Point », qui protègent des ressources spécifiques contre tout accès non-autorisé, en appliquant systématiquement la décision du PDP. Cette architecture distribuée présente des avantages en termes de modularité et de sécurité, mais présente également des inconvénients car elle augmente la latence du système. En effet, la communication entre le PDP et les PEP, en particulier la communication sécurisée avec authentification mutuelle, induit une augmentation des temps de traitement, et de plus le PDP a une charge calculatoire très élevée en tant que point de décision centralisé.

L'article « Na Kika : Secure Service Execution and Composition in Open Edge-Side Computing Network » de Robert Grimm et al, publié en 2006, se situe dans le domaine des services web et de l'accès sécurisé à des contenus via les réseaux de communication reliant des serveurs de calcul, et décrit la mise en œuvre de politiques de sécurité.

Il est connu, afin de diminuer la latence du contrôle d'accès, d'utiliser des mécanismes de mise en cache, afin de ré-utiliser des décisions d'accès préalablement calculées pour des requêtes ayant les mêmes attributs.

Les mécanismes de mise en cache s'appuient sur des structures de données qui favorisent l'accès rapide à une donnée préalablement mémorisée telles que les tables de hachage, ainsi que la mémoire cache qui est une mémoire volatile, à accès rapide en lecture/écriture. Cependant, l'efficacité d'un tel mécanisme connu est limitée généralement à des requêtes répétées à l'identique ou quasi-identiques, c'est-à-dire avec exactement les mêmes valeurs d'attributs, des attributs présentés dans le même ordre, et sans attribut supplémentaire.

En effet, dans le cas où les requêtes comportent des attributs qui ne sont pas utiles pour la décision d'autorisation ou de refus d'accès, et qui prennent des valeurs différentes, comme par exemple la date d'émission d'une requête, un mécanisme de cache simple ne permet pas de prendre une décision sur la base de mémorisation de valeurs d'attributs de requêtes préalables.

Donc avec un mécanisme de cache simple, dès que des requêtes sont différentes, la décision à partir du cache est considérée impossible, et le contrôle d'accès complet effectué par le PDP en lien avec le PEP est effectué. La complexité du contrôle d'accès demeure importante.

Il existe donc un besoin d'optimiser le contrôle d'accès basé sur les attributs pour diminuer la complexité et le temps de latence.

A cet effet, l'invention propose selon un premier aspect, un procédé de contrôle d'accès à base de requêtes multi-attributs selon la revendication 1.

Avantageusement, le procédé de contrôle d'accès selon l'invention permet d'optimiser l'utilisation d'un système de cache de décisions, et le temps de calcul, grâce à la mémorisation de valeurs d'attributs - pertinents pour l'évaluation de politique - de requêtes préalables sous forme d'arbres de décision.

Le procédé de contrôle d'accès selon l'invention peut présenter une ou plusieurs des caractéristiques des revendications dépendantes 2 à 7, prises indépendamment ou en combinaison.

Selon un autre aspect, l'invention concerne un système de contrôle d'accès à base de requêtes multi-attributs selon la revendication 9.

Selon un autre aspect, l'invention concerne un programme d'ordinateur comportant des instructions logicielles qui, lorsqu'elles sont mises en œuvre par un dispositif électronique de calcul, mettent en œuvre un procédé contrôle d'accès tel que brièvement décrit ci-dessus.

Selon un autre aspect, l'invention concerne un support d'informations, sur lequel sont enregistrées des instructions logicielles qui, lorsqu'elles sont mises en œuvre par un dispositif électronique de calcul, mettent en œuvre un procédé de contrôle d'accès tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 est un exemple d'architecture de contrôle d'accès dans un scénario d'utilisation de l'invention ;
- [Fig 2] la figure 2 illustre schématiquement un système de contrôle d'accès selon un mode de réalisation de l'invention;
- [Fig 3] la figure 3 illustre la mise à jour d'un arbre de décision mémorisé dans un exemple ;
- [Fig 4] la figure 4 est un synoptique des blocs fonctionnels d'un dispositif électronique de calcul adapté à mettre en œuvre des étapes du procédé de contrôle d'accès de l'invention selon un mode de réalisation ;
- [Fig 5] la figure 5 est un synoptique des principales étapes d'un mode de réalisation d'un procédé de contrôle d'accès selon l'invention.

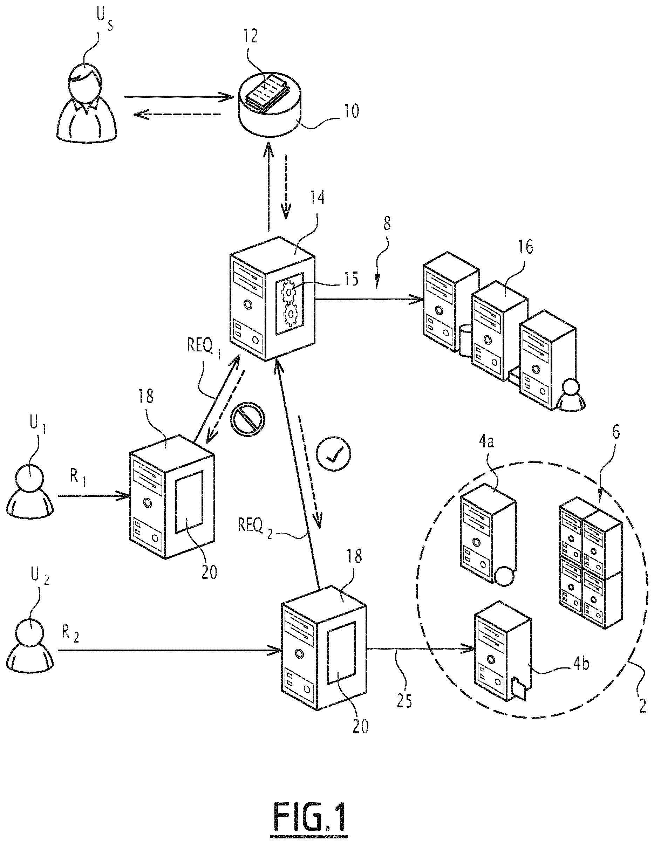

La figure 1 illustre schématiquement un cas d'utilisation d'un système d'accès à un système ou à un service informatique selon l'invention.

Des utilisateurs U₁, U₂ demandent un accès à une partie d'un système informatique 2, qui est un système protégé par des droits d'accès et comporte plusieurs serveurs 4a, 4b, ainsi qu'un système de stockage des données 6, qui stocke des données protégées.

L'émetteur d'une requête d'accès est soit un utilisateur comme illustré dans l'exemple de la figure 1, soit une application.

La partie du système informatique pour laquelle est demandé l'accès est de manière générale une ressource sensible, par exemple une base de données ou un serveur de fichiers, un appareil connecté, ou bien un service ou un ensemble de services exécutables.

La partie du système informatique pour laquelle est demandé l'accès est également appelée ressource protégée.

L'accès demandé est, dans un mode de réalisation, caractérisé par des attributs d'action, par exemple, si la partie du système informatique pour laquelle l'accès est demandé est un ensemble de fichiers, l'accès demandé peut être un accès en lecture et/ou un accès en écriture. Si l'accès demandé concerne l'exécution d'un logiciel, plusieurs niveaux de service peuvent être associés à l'accès.

Pour accéder à une partie du système informatique 2, un système de contrôle d'accès multi-attributs 8 est mis en place.

Le système de contrôle d'accès multi-attributs 8 comporte une unité électronique 10 de stockage, qui mémorise une ou plusieurs politiques d'accès 12 (ou *« access policies »* en anglais), chaque politique d'accès 12 comprenant un ensemble de règles à valider pour accéder à la partie requise du système informatique 2.

Par exemple, plusieurs politiques d'accès 12 sont mémorisées, correspondant à des domaines d'administration différents, selon les contraintes organisationnelles de l'entreprise, et donc gérées par des administrateurs spécifiques.

Les politiques d'accès 12 sont susceptibles d'être modifiées uniquement par des utilisateurs autorisés U_{S}, ayant un niveau d'habilitation de sécurité donné. Ainsi, les politiques d'accès sont sécurisées.

Le système de contrôle d'accès multi-attributs 8 comporte également un dispositif électronique de calcul 14, par exemple un ordinateur, adapté à mettre en œuvre un module 15 centralisé de décision d'autorisation/refus d'accès sur la base de requêtes multi-attributs, en fonction de la politique d'accès 12. Selon la terminologie XACML, le dispositif 14 réalise une fonction PDP, mais cette fonction est enrichie par l'invention comme expliqué ci-après.

Dans un mode de réalisation, le module 15 d'autorisation/refus d'accès sur la base de requêtes multi-attributs, composant principal du PDP, est mis en œuvre sous forme de programme d'ordinateur comportant des instructions logicielles, stocké sur un support, non représenté, lisible par un ordinateur 14. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante, le module 15 est réalisé sous forme d'un composant logique programmable, tel qu'un FPGA (de l'anglais *Field Programmable Gate Array),* un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit).*

Le système de contrôle d'accès multi-attributs 8 comporte également des dispositifs de stockage et de calcul 16, adaptés à mémoriser et fournir des attributs supplémentaires au module 15 (PDP) qui viennent compléter les attributs déjà fournis dans la requête par le module 20 (PEP) de traitement de requêtes d'accès utilisateur, par exemple des bases de données ou services d'identité.

Le système de contrôle d'accès multi-attributs 8 comporte également un ou plusieurs dispositifs électroniques de calcul 18 mettant en œuvre chacun un module 20 de traitement de requêtes d'accès utilisateur. Selon la terminologie XACML, chaque module 20 réalise une fonction PEP qui est enrichie par l'invention comme expliqué ci-après.

Chaque utilisateur U₁ (resp. U₂) effectue une requête d'accès R₁ (resp. R₂) appelée requête utilisateur.

Par exemple, chaque utilisateur U₁, U₂ souhaite accéder en lecture à un fichier stocké sur le serveur 4b du système informatique 2.

Le module 20 est configuré pour mettre en forme des requêtes d'accès multi-attributs REQ₁, REQ2 à partir des requêtes utilisateur, et pour vérifier une possibilité d'accorder ou de refuser un accès en fonction de données stockées dans le système de cache de décisions du dispositif de calcul 18, décrit en détail ci-après.

Les attributs sont par exemple : des attributs relatifs à l'émetteur de la requête, ou sujet (utilisateur U₁ ou U₂), par exemple son identifiant, son rôle dans son organisation, son niveau d'habilitation ; des attributs relatifs à l'action du sujet ; des attributs relatifs à la partie du système ou à la ressource à accéder, par exemple un identifiant, un type, une adresse ; des attributs relatifs à l'environnement, par exemple la date/heure courante.

En cas d'impossibilité de décision à partir des données mémorisées dans le système de cache de décision, les requêtes de contrôle d'accès multi-attributs REQ₁, REQ₂ sont si besoin formatées selon un format prédéterminé approprié, par exemple le format XACML, et transmises au module 15 centralisé en fonction de la politique d'accès 12.

Dans l'exemple illustré à la figure 1, l'accès au système informatique 2 est refusé en réponse à la requête d'accès multi-attributs REQ₁, donc l'utilisateur U₁ ayant émis la requête utilisateur R₁ n'est pas autorisé à accéder à la partie du système informatique 2.

L'accès au système informatique 2 est autorisé en réponse à la requête d'accès multi-attributs REQ₂, donc l'utilisateur U₂ ayant émis la requête utilisateur R₂ est autorisé à accéder au système informatique 2, ce qui est indiqué par la flèche 25 dans la figure 1.

Dans un mode de réalisation, le module 20 de traitement de requêtes d'accès utilisateur est mis en œuvre sous forme de programmes d'ordinateur comportant des instructions logicielles. Chaque programme d'ordinateur est stocké sur un support, non représenté, lisible par un ordinateur 18. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante, le module 20 est réalisé sous forme de composants logiques programmables, tel qu'un FPGA (de l'anglais *Field Programmable Gate Array),* un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit).*

Le système de contrôle d'accès 8, avec tous ses composants matériels et logiciels joue un rôle de mur de protection pour l'accès au du système informatique 2.

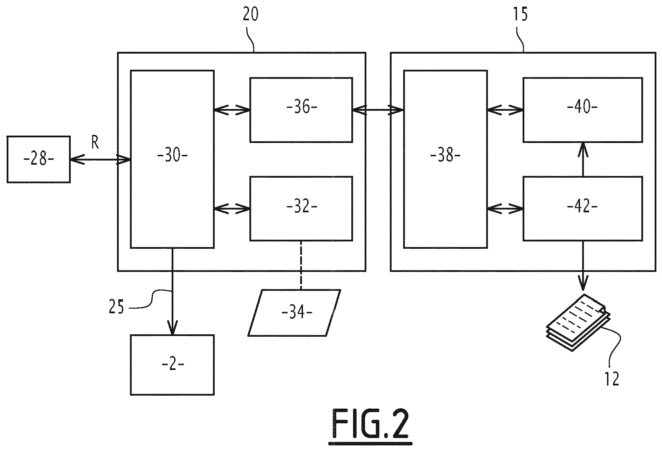

La figure 2 illustre des composants, appelées également modules, du module 20 de traitement des requêtes d'accès utilisateur et du module 15 centralisé de d'autorisation/refus d'accès sur la base de requêtes multi-attributs sur la base des ensembles de règles formant des politiques d'accès 12, mis en œuvre dans un système de contrôle d'accès 8 selon un mode de réalisation de l'invention.

Dans un mode de réalisation, chaque module est mis en œuvre sous forme de programmes d'ordinateur comportant des instructions logicielles comme expliqué ci-dessus, ou sous forme de composants logiques programmables.

Le module 20 de traitement des requêtes utilisateur comprend un module 30 de transformation des requêtes, configuré pour recevoir des requêtes d'accès à une partie d'un système informatique 2, transmises par un système informatique client 28 opéré par un utilisateur.

Le module de transformation des requêtes 30 est également adapté à transmettre le résultat d'autorisation ou de refus au système informatique client 28. En cas d'autorisation, l'accès à la partie du système informatique est fourni au système client.

Le module 30 de transformation des requêtes est configuré pour appliquer un ordonnancement et une factorisation des attributs d'une requête d'accès multi-attributs, afin d'obtenir un ensemble d'attributs dans un format appelé format canonique.

Par exemple, les attributs d'une requête multi-attributs sont ré-ordonnancés selon un ordre prédéterminé, et les valeurs d'attributs sont regroupées en cas de répétition du même identifiant d'attribut. Par exemple, si un attribut a plusieurs valeurs d'attributs associées dans la requête, ces valeurs sont regroupées, par exemple sous forme de liste de valeurs. Ainsi, un deuxième ensemble d'attributs est obtenu à partir d'un premier ensemble d'attributs.

Les valeurs d'attributs d'une requête multi-attributs sont appelées ci-après valeurs d'attributs de requête.

Une requête d'accès multi-attributs, avec les valeurs d'attributs de requête, est transmise à un système 32 de cache de décisions permettant d'obtenir, dans une partie des cas, une décision rapide d'autorisation ou de refus d'accès à la partie du système informatique, sur la base de données relatives à des requêtes d'accès multi-attributs mémorisées au préalable.

Un système de cache de décisions s'appuie sur une structure de données optimisée pour l'accès en lecture, mémorisée de préférence en mémoire cache (mémoire électronique volatile à accès rapide en lecture et écriture). L'accès rapide est obtenu par des tables de hachage ou d'autres types de tableau associatif optimisés pour l'accès rapide.

Le système 32 de cache de décisions est configuré pour gérer un cache de décisions d'autorisation à accès rapide 34, qui mémorise un arbre de décision associé à un module 15 centralisé de décision d'autorisation/refus d'accès (module PDP).

Le système 32 de cache de décisions est configuré pour mettre en œuvre une vérification de présence dans le cache 34 de données (arbre de décision) permettant d'obtenir une décision d'autorisation d'accès ou de refus d'accès sur la base des valeurs d'attributs de la requête courante, et des décisions passées et déjà mémorisées.

Le système 32 de cache de décisions d'autorisation est également configuré pour effectuer des mises à jour des arbres de décision mémorisés dans le module 34.

Le module 20 comprend également un module 36 d'interfaçage avec le module 15 de décision d'autorisation/refus d'accès sur la base des ensembles de règles formant des politiques d'accès 12.

Il est à noter que, dans une variante non illustrée à la figure 2, si le module 20 de traitement de requêtes utilisateurs (PEP) communique avec plusieurs PDPs, le PEP doit utiliser un arbre de décision et un module d'interfaçage 36 spécifique par PDP.

Le module d'interfaçage 36 est notamment configuré pour la mise en forme d'une requête d'accès multi-attributs dans un format approprié pour communiquer avec le module 15, par exemple XACML, et la transmission d'une telle requête mise en forme au module 15 de décision d'autorisation/refus d'accès.

Ce module 36 est utilisé dans le cas où les données mémorisées dans le cache de décisions 34 ne permettent pas d'obtenir une décision d'autorisation d'accès ou de refus d'accès.

Le module 15 comprend un module 38 de gestion des requêtes d'accès et des contextes d'évaluation des décisions associées à chaque requête. Ce module traite chaque requête d'autorisation venant du module d'interfaçage 36 et à partir de cette requête, crée, maintient et éventuellement enrichit au fur et à mesure un contexte d'évaluation associé, et communique ce contexte basé sur la requête d'accès à un module d'évaluation de politique d'accès 42, aussi appelé *moteur de décision.* Le module 38 est adapté à communiquer avec un module 40 de collecte d'informations - méta-données - et de supervision sur l'évaluation de politique par le module 42. Le module 40 est configuré pour transmettre des informations relatives à la mise en œuvre et l'évaluation de la politique d'accès, comprenant au moins la liste des attributs effectivement utilisés par le module 42 pour la prise de décision, et éventuellement d'autres informations permettant d'améliorer le système 32 de cache de décisions du module 20.

En effet, une requête multi-attributs peut, dans certains cas d'application, contenir des valeurs d'attributs qui ne sont pas utiles pour l'évaluation de la politique. Ces informations relatives à la mise en œuvre et l'évaluation de la politique sont transmises au module 38 qui les transmet, en tant que paramètres de mise à jour du système de cache de décisions 32, dans les réponses envoyées au module d'interfaçage 36.

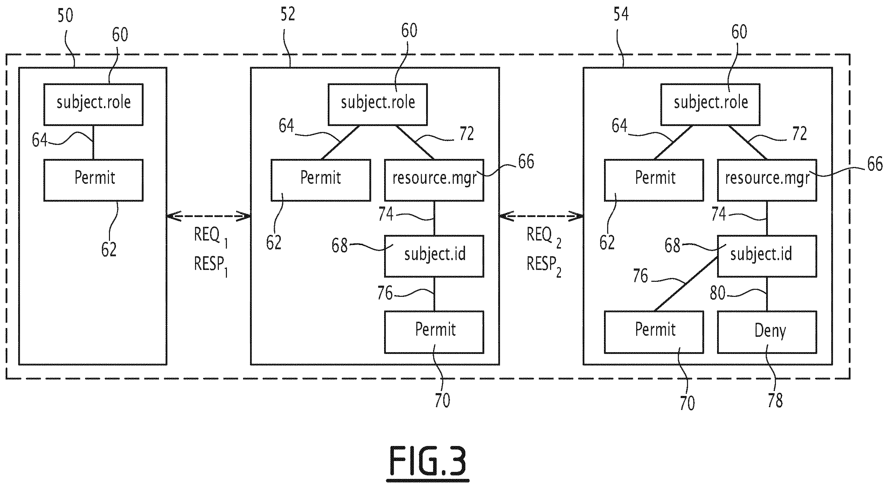

La figure 3 illustre schématiquement des mises à jour d'un arbre de décision, mémorisé dans le cache à accès rapide 34 et associé à des requêtes d'accès à un système informatique, par exemple une partie d'une base de données mémorisée. Par exemple, la partie du système est une base de données de ressources humaines dans une entreprise.

Bien entendu, il s'agit d'un exemple simplifié présenté ici à des fins explicatives.

Suite à une première requête d'accès utilisateur, un premier arbre de décision 50 est mémorisé. Suite à une première mise à jour, un deuxième arbre de décision 52 est mémorisé. Suite à une deuxième mise à jour, un troisième arbre de décision 54 est mémorisé.

Un arbre de décision est un graphe de décision hiérarchique, formé de nœuds comprenant un nœud racine, un ou plusieurs nœuds intermédiaires et un ou plusieurs nœuds terminaux ou feuilles, les nœuds ayant chacun un niveau de profondeur associé comme expliqué en détail ci-après.

Chaque arbre de décision mémorisé 50, 52, 54 comprend un nœud racine 60 associé à un attribut, qui est l'attribut « subject.role » dans cet exemple, représentatif du rôle du sujet (utilisateur demandant l'accès à une partie du système) dans l'entreprise.

L'arbre de décision 50 comprend en outre un nœud terminal 62 représentatif de la décision d'autorisation ou de refus d'accès attribué au sujet caractérisé par la valeur d'attribut « subject.role » mémorisée en lien avec l'arête 64 liant le nœud racine 60 et le nœud terminal 62. Dans l'exemple, la valeur d'attribut est « Chief_HR_Officer ». En d'autres termes, l'accès à l'ensemble de la base de données est autorisé si le rôle du sujet identifié dans la requête utilisateur est « Chief_HR_Officer ».

Suite à une nouvelle requête d'accès multi-attributs REQ1 une autorisation d'accès est obtenue du module centralisé de décision 15. Dans cet exemple, la requête d'accès comporte les attributs suivants :

```
  REQ1: Subject.id=Charlie
    Subject.role=Manager
    Action.id=read_HR_profile
    Resource.id=Bob
    Resource.mgr=Charlie
```

Cette requête concerne un accès à une sous-partie de la base de données concernant une personne, également appelée ressource, dont l'identifiant est Bob.

La réponse RESP1 à la requête REQ1comportant la décision d'autorisation ou du refus d'accès comprend en plus au moins une information de mise à jour destinée au module 20, comportant les attributs effectivement utilisés par l'évaluation de la politique par le module 42 pour la requête REQ1.

Par exemple la réponse RESP1 comprend :

```
  Decision : Permit
  Advice : attributs :{ subject.role, resource.mgr, subject.id}
```

Le paramètre « advice » comporte l'information de mise à jour, en particulier une liste des attributs effectivement utilisés dans la décision d'autorisation ou de refus d'accès selon la politique à appliquer.

L'arbre de décision 50 est mis à jour et l'arbre de décision 52 est obtenu. La mise à jour consiste, dans l'exemple illustré, en un ajout de branches dans l'arbre de décision 50 pour obtenir l'arbre de décision 52.

Des nœuds intermédiaires 66 et 68 sont ajoutés, ainsi qu'un autre nœud terminal 70. Le nœud intermédiaire 66 est un nœud enfant du nœud racine 60, et est associé à l'attribut « resource.mgr ».

Dans un mode de réalisation, on associe des niveaux de profondeur croissants en partant du nœud racine vers les nœuds terminaux.

Bien entendu, il s'agit d'une convention, un autre ordonnancement étant possible.

Ainsi, si on associe le niveau de profondeur 0 au nœud racine, le nœud intermédiaire 66 a un niveau de profondeur égal à 1.

Un nœud (nœud racine ou nœud intermédiaire) de niveau de profondeur N, N étant un entier supérieur ou égal à 0, est parent d'un nœud de profondeur N+1 lorsqu'ils sont reliés par une arête dans l'arbre. Un nœud de profondeur N+1 (nœud intermédiaire ou nœud terminal) est enfant d'un nœud de profondeur N lorsqu'ils sont reliés par une arête dans l'arbre.

Par exemple, le nœud racine 60 est parent du nœud terminal 62 et du nœud intermédiaire 66. Le nœud intermédiaire 66 est enfant du nœud racine 60. Le nœud intermédiaire 68 est un nœud enfant du nœud intermédiaire 66, et est associé à l'attribut « subject.id ». Dans cet exemple, le nœud intermédiaire 68 a un niveau de profondeur égal à 2.

Le nœud 70 est un nœud terminal représentation de l'autorisation ou du refus d'accès. Dans l'arbre de décision 52, le nœud terminal 70 est un nœud enfant du nœud 68.

Les nœuds sont reliés dans l'arbre de décision 52 par des arêtes, associées à des valeurs d'attribut. Chaque arête 72, 74, 76 qui relie deux nœuds est associée à la valeur d'attribut du nœud parent, qui est également le nœud de profondeur de niveau inférieur selon la convention choisie.

Ainsi, l'arête 72, reliant le nœud racine 60 associé à l'attribut « subject.role » et le nœud intermédiaire 66, est associée à la valeur « Manager » de l'attribut « subject.role » de la requête REQ1.

L'arête 74, reliant le nœud intermédiaire 66 associé à l'attribut « resource.mgr » et le nœud intermédiaire 68 est associée à la valeur « Charlie» de l'attribut « resource.mgr » de la requête REQ1.

L'arête 76, reliant le nœud intermédiaire 68 associé à l'attribut « subject.id » et le nœud terminal 70 est associée à la valeur « Charlie» de l'attribut « subject.id » de la requête REQ1.

En d'autres termes, le sujet Charlie, qui a un rôle de manager, est autorisé à accéder, dans la base de données, aux informations relatives aux personnes dont il est inscrit comme manager, en particulier « Bob ».

Suite à une nouvelle requête d'accès multi-attributs REQ2 un refus d'accès est obtenu du PDP. Dans cet exemple, la requête d'accès REQ2 comporte les attributs suivants :

```
  REQ2: Subject.id=Dave
    Subject.role=Manager
    Action.id=read_HR_profile
    Resource.id=Bob
    Resource.mgr=Charlie
```

En d'autres termes, dans cet exemple, la requête REQ2 est similaire à la requête REQ1, mais le sujet de la requête est Dave et non Charlie.

La réponse RESP2 à la requête REQ2 comportant la décision de refus d'accès comprend en plus au moins une information de mise à jour comportant les attributs effectivement utilisés pour l'évaluation de la politique d'accès.

Par exemple la réponse RESP1 comprend :

```
  Decision : Deny
  Advice : attributs :{ subject.role, resource.mgr, subject.id}
```

Le paramètre « Advice » comporte l'information de mise à jour, et fournit une liste des attributs effectivement utilisés dans la décision d'autorisation ou de refus d'accès selon la politique d'accès à appliquer.

L'arbre de décision 52 est mis à jour et l'arbre de décision 54 est obtenu. La mise à jour consiste, dans l'exemple illustré, en un ajout de branches dans l'arbre de décision 54.

Un nœud terminal 78, enfant du nœud intermédiaire 68 est ajouté, et ce nœud terminal est associé à une décision de refus «Deny ».

L'arête 80 reliant le nœud intermédiaire 68 associé à l'attribut « subject.id » et le nœud terminal 78 est associée à la valeur « Dave» de l'attribut « subject.id » de la requête REQ2.

En d'autres termes, le sujet Dave, qui a un rôle de manager, n'est pas autorisé à accéder, dans la base de données, aux informations relatives à une personne ayant un manager différent (Charlie dans cet exemple).

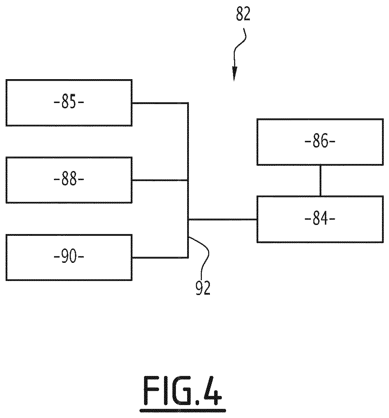

La figure 4 illustre schématiquement les principaux blocs fonctionnels d'un dispositif électronique de calcul 82 adapté à mettre en œuvre des étapes d'un procédé de contrôle d'accès à base de requêtes multi-attributs tel que décrit.

Le dispositif 82 comprend une unité centrale de calcul 84, ou CPU, comportant un ou plusieurs processeurs électroniques, apte à exécuter des instructions de programme informatique lorsque le dispositif 82 est mis sous tension.

Le dispositif 82 comporte également une unité de mémoire électronique 86 adaptée à stocker des informations, en particulier des registres. En particulier, des instructions de code exécutable aptes à mettre en œuvre le procédé de contrôle d'accès selon l'invention sont mémorisées.

Le dispositif 82 comporte une interface de commande 85 permettant de mettre à jour des paramètres et de recevoir des commandes d'un opérateur.

De manière optionnelle, le dispositif 82 comprend un écran 88 et un moyen supplémentaire de pointage 90, tel une souris.

Les divers blocs fonctionnels du dispositif 6 décrits ci-dessus sont connectés via un bus de communication 92.

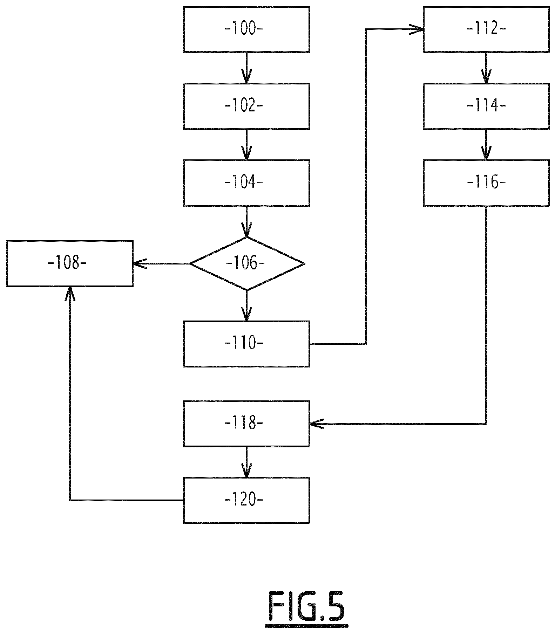

La figure 5 est un synoptique des principales étapes d'un mode de réalisation d'un procédé de contrôle d'accès selon l'invention.

Lors d'une première étape 100, une requête d'accès utilisateur est reçue par le module 20 de traitement de requêtes d'accès utilisateur.

En particulier, la requête d'accès utilisateur comprend des valeurs d'attribut relatives à l'identification de l'émetteur qui formule la requête (le sujet), de l'action qu'il veut effectuer sur la ressource, et de la ressource à accéder.

L'étape 100 est suivie d'une étape 102 de formation d'un premier ensemble d'attributs de requête d'accès multi-attributs à partir des attributs de la requête utilisateur, enrichi le cas échéant d'attributs d'environnement, puis une étape de mise sous forme canonique (ordonnancement et factorisation des valeurs d'attributs) dudit premier ensemble de valeurs d'attributs permettant d'obtenir un deuxième ensemble de valeurs d'attributs.

Cette étape permet, avantageusement, de présenter les attributs dans un ordre prédéterminé et de regrouper, le cas échéant, toutes les valeurs associées à un même attribut. En effet, un même attribut peut dans certains cas prendre plusieurs valeurs, comme par exemple l'attribut « subject.role » de l'exemple de la figure 3, car une même personne peut cumuler plusieurs rôles dans une organisation telle une entreprise.

L'étape 102 de formation d'une requête multi-attributs, comportant un premier ensemble d'attributs ou un deuxième ensemble d'attributs sous forme canonique, est suivie d'une étape 104 de vérification de la possibilité d'obtenir une décision d'autorisation ou de refus d'accès à partir des données mémorisées relatives aux requêtes préalables. L'étape 104 met en œuvre en particulier une comparaison de valeurs d'attributs de requête à des valeurs d'attributs mémorisés dans le cache de données à accès rapide, sous forme d'arbre de décision.

Au moins une partie des valeurs d'attributs de la requête, issues du premier ou du deuxième ensemble d'attributs après application de l'étape 102, est comparée aux valeurs mémorisées. En effet, comme expliqué ci-dessus, toutes les valeurs d'attribut de la requête ne sont pas nécessairement utilisées dans la prise de décision.

Par exemple, en se référant à l'exemple de la figure 3, si une requête d'accès avec une action « read_HR_profile » est émise par un sujet dont le rôle est « Chief_HR_Officer », l'autorisation est accordée (arbre de décision 50) quelles que soient les valeurs des autres attributs de la requête, par exemple « resource.id » et « resource.mgr » .

Dans un mode de réalisation, les nœuds de l'arbre de décision sont parcourus dans l'ordre croissant des niveaux de profondeur de l'arbre de décision.

Pour chaque niveau de profondeur un nœud courant ayant un attribut courant associé est sélectionné. Si l'attribut courant est un des attributs de la requête, la valeur d'attribut de la requête est comparée à chaque valeur d'attribut associée à une arête reliant ledit nœud courant à un nœud enfant. En cas de comparaison positive, ce nœud enfant est sélectionné comme nouveau nœud courant s'il s'agit d'un nœud intermédiaire. S'il s'agit d'un nœud terminal, la décision d'autorisation ou de refus d'accès est obtenue par la valeur du nœud.

Dès qu'un nœud terminal comportant une décision d'autorisation d'accès ou de refus est atteint, l'étape de vérification 104 est terminée avec un résultat positif. Si un attribut courant donné, correspondant à un nœud de l'arbre de décision, a une valeur d'attribut dans la requête différente de toutes les valeurs d'attribut associées à des arêtes du graphe de décision, la décision ne peut pas être obtenue à partir des données mémorisées dans le cache et la vérification est terminée avec un résultat négatif.

Le résultat de la vérification est testé à l'étape 106.

En cas de vérification positive, l'étape 106 est suivie d'une étape 108 d'autorisation ou refus d'accès au requérant.

En cas de vérification négative, l'étape 106 est suivie d'une étape 110 de transmission de la requête d'accès au module 15 qui effectue l'évaluation de politique. Lors de cette étape 110, la requête d'accès est formatée selon un format approprié, par exemple XACML ou tout autre langage adapté pour le formatage de requêtes multi-attributs.

Ainsi, avantageusement, la compatibilité avec un format standardisé telle que le standard XACML 3.0 de l'OASIS est maintenue.

Le procédé comprend une étape 112 de réception d'une requête d'accès multi-attributs formatée et d'initialisation du contexte d'évaluation avec les éléments suivants :
- attributs provenant de la requête d'accès (envoyé par le module 20) ;
- attributs déterminés localement par le module 38, telles que la date et heure courante (date/heure de réception de la requête) ;
- attributs récupérées depuis des sources externes (éléments 16) telles que serveurs de base de données ou services.

L'étape 112 est suivie d'une étape 114 de mise en œuvre de l'évaluation de la politique d'accès à appliquer en fonction du contexte, permettant d'obtenir une décision d'autorisation ou de refus d'accès.

Une étape 116 d'obtention d'informations de mise à jour du système de cache de décisions 32 est également mise en œuvre. En variante, l'étape 116 est mise en œuvre sensiblement en parallèle avec l'étape 114. Elle consiste à collecter des informations utiles pour la mise à jour des arbres de décision mémorisés, en particulier répertorier les attributs effectivement utilisés pour la prise de décision, comme déjà expliqué ci-dessus en référence à l'exemple de la figure 3 (les parties « Advice » dans les réponses RESP1 et RESP2 données en exemple).

Dans un mode de réalisation, les informations de mise à jour comportent également des instructions de mise en cache de la décision d'autorisation, par exemple une durée de validité (après quoi la décision n'est considérée comme plus valide et doit être retirée du cache), également appelée TTL pour « time to live » en anglais, de maintien de la décision associée aux attributs de la requête. Une fois le TTL expiré, le nœud terminal correspondant doit être supprimé ainsi que tous les nœuds ancêtres laissés sans descendant (suppression récursive).

Le résultat de la décision à la requête d'accès ainsi que des informations de mise à jour sont obtenues, lors de l'étape 118 de réception de la réponse à la requête d'accès multi-attributs.

Lorsque les modules 15 de décision d'autorisation ou refus d'accès et 20 de traitement des requêtes d'accès utilisateur sont mis en œuvre par des dispositifs distants adaptés à communiquer via un réseau de télécommunications, la réponse - comportant la décision d'autorisation d'accès ou de refus d'accès et les informations de mise à jour -est transmise par le module 15 au module 20 par un protocole de communications choisi.

De plus, l'étape 118 est suivie d'une étape 120 de mise à jour de l'arbre de décision correspondant à la requête traitée dans le système de cache 32.

La mise à jour 120 d'un arbre de décision comporte l'ajout d'un ou plusieurs nœuds intermédiaires et d'un nœud terminal, et d'arêtes reliant les nœuds ajoutés, avec des valeurs d'attribut associées. Seuls des nœuds ayant des attributs associés qui figurent dans la liste des attributs effectivement utilisés dans la décision sont ajoutés dans la structure d'arbre de décision mémorisée, s'ils ne sont pas déjà présents dans l'arbre. Les nœuds sont reliés par des arêtes auxquelles sont associées les valeurs d'attributs de la requête d'accès traitée.

Le nœud terminal ajouté est associé à la décision d'autorisation ou de refus reçue dans la réponse.

L'étape 120 est suivie de l'étape 108 préalablement décrite d'autorisation ou refus d'accès au requérant selon la réponse reçue.

Dans un mode de réalisation, les étapes 100 à 110 et 118, 120 sont effectuées par un module 20 de traitement des requêtes utilisateurs, qui effectue un rôle d'interface d'entrée/sortie et d'autorisation ou de refus d'accès vis-à-vis de l'émetteur des requêtes. Les étapes 112 à 114 sont effectuées par le module 15 de décision, qui est de préférence centralisé.

De préférence, les modules 20 de traitement de requêtes utilisateur sont distribués, et le module 15 de décision est centralisé, et ils sont mis en œuvre respectivement par des dispositifs de calcul différents.

En variante, les modules 15 et 20 sont mis en œuvre par un même dispositif de calcul.

Avantageusement, le procédé de contrôle d'accès selon l'invention permet d'optimiser l'utilisation d'un système de cache de décision à base de tables de hachage ou autres types de tableau associatif optimisés pour l'accès rapide (en O(1)) à des valeurs indexées ; et a fortiori le temps de calcul, grâce à la mise sous forme canonique des requêtes d'accès et la mémorisation de valeurs d'attributs - pertinents pour l'évaluation de politique - de requêtes préalables sous forme d'arbres de décision, et en particulier de traiter des requêtes complexes à partir du système de cache à accès rapide.

## Revendications

1. Procédé de contrôle d'accès à base de requêtes multi-attributs, pour un accès à une partie d'un système informatique, le contrôle d'accès permettant d'autoriser ou de refuser un accès à un émetteur de requête en fonction de valeurs d'attributs contenus dans une requête, le contrôle d'accès étant effectué par un système de contrôle d'accès en fonction d'une politique d'accès (12) comportant un ensemble de règles préalablement mémorisé, le système de contrôle d'accès comportant un système de cache de décisions, adapté à mémoriser des valeurs d'attributs de requêtes dans un cache et au moins un processeur de calcul, le procédé comportant les étapes suivantes, mises en œuvre par un processeur :
- obtention (100) d'une requête d'accès à une partie du système informatique, dite requête d'accès en cours de traitement, comportant une pluralité d'attributs ayant des valeurs d'attributs de requête,
- vérification (104), à partir d'au moins un sous-ensemble de ladite pluralité d'attributs de la requête d'accès en cours de traitement, ayant des valeurs d'attributs de requête, de présence dans le cache de valeurs d'attributs issus de requêtes préalables et permettant d'obtenir une décision d'autorisation ou de refus d'accès à ladite partie du système informatique,
la vérification comportant une comparaison de valeurs d'attributs de requête à des valeurs d'attributs mémorisés dans ledit système de cache de décisions (32) sous forme d'arbre de décision (50, 52, 54),
en cas de vérification positive, autorisation ou refus d'accès (108) à ladite partie du système informatique à partir dudit arbre de décision (50, 52, 54), et
en cas de vérification négative, des étapes de :
- transmission (110) de la requête d'accès en cours de traitement à un module de décision (15) configuré pour effectuer une évaluation de la politique d'accès (12) dans le contexte de ladite requête,
- obtention (118) d'une réponse comprenant une décision d'autorisation ou de refus d'accès en fonction dudit ensemble d'attributs ayant des valeurs d'attributs de requête, et comprenant au moins une information de mise à jour de l'arbre de décision du système de cache de décisions (32), et
- mise à jour (120) dudit arbre de décision en fonction de ladite au moins une information de mise à jour, ladite mise à jour comportant un ajout d'un nœud intermédiaire associé à un attribut indiqué dans ladite information de mise à jour et/ou un ajout d'une arête ayant pour valeur associée une valeur d'attribut de requête associé à un attribut indiqué dans ladite information de mise à jour et un ajout de nœud terminal associé à la décision d'autorisation ou de refus d'accès.

2. Procédé de contrôle d'accès selon la revendication 1, dans lequel ladite au moins une information de mise à jour comporte au moins une liste d'attributs, sous-ensemble des attributs de la requête d'accès en cours de traitement effectivement utilisés pour l'évaluation de la politique d'accès (12) par le module de décision (15).

3. Procédé de contrôle d'accès selon l'une des revendications 1 ou 2, dans lequel chaque arbre de décision (50, 52, 54) mémorisé dans ledit système de cache de décisions (32) comprend un nœud racine (60) associé à un attribut utilisé pour autoriser ou refuser un accès selon la politique d'accès (12) préalablement mémorisée, au moins un nœud terminal (62, 70, 78) représentatif d'une décision d'autorisation ou de refus d'accès, et au moins une arête (64, 72) reliant ledit nœud racine (60) à un nœud intermédiaire (66) ou à un nœud terminal (62), ladite arête étant associée à une valeur de l'attribut associé au nœud racine (60).

4. Procédé de contrôle d'accès selon la revendication 3, dans lequel au moins un arbre de décision (52, 54) mémorisé comporte en outre au moins un nœud intermédiaire (66, 68) entre ledit nœud racine (60) et un nœud terminal (70, 78), le nœud intermédiaire étant associé à un attribut utilisé pour autoriser ou refuser un accès selon la politique d'accès (12) préalablement mémorisée, le nœud intermédiaire (66, 68) ayant un niveau de profondeur associé, le nœud intermédiaire (66, 68) étant relié par une première arête (72, 74) à un nœud parent (60, 66), ledit nœud parent étant le nœud racine (60) ou un nœud intermédiaire (66) parent de niveau de profondeur inférieur et par une deuxième arête (74, 76, 80) à au moins un nœud enfant (68, 70, 78), ledit nœud enfant (68, 70, 78) étant un nœud terminal (70, 78) ou un nœud intermédiaire (68) enfant de niveau de profondeur supérieur, ladite première arête (72, 74) étant associée à la valeur de l'attribut associé au nœud parent (60, 66), ladite deuxième arête (74, 76, 80) étant associée à une valeur de l'attribut associé audit nœud intermédiaire (66, 68).

5. Procédé de contrôle d'accès selon la revendication 4, dans lequel ladite vérification comporte, dans un ordre croissant des niveaux de profondeur de l'arbre de décision, pour chaque niveau de profondeur :
- une sélection d'un nœud courant ayant un attribut courant associé,
- une obtention de la ou des valeurs de l'attribut correspondant dans la requête d'accès en cours de traitement et une comparaison de ladite valeur à chaque valeur d'attribut associée à une arête reliant ledit nœud courant à un nœud enfant,
et en cas de comparaison positive, sélection dudit nœud enfant comme nœud courant, et si le nœud courant est un nœud terminal, obtention de la décision d'autorisation ou de refus d'accès associée audit nœud terminal.

6. Procédé de contrôle d'accès selon la revendication 5, dans lequel, si, pour un niveau de profondeur, la valeur d'attribut de la requête en cours de traitement est différente de chaque valeur d'attribut associée à une arête reliant ledit nœud courant à un nœud enfant, ladite vérification est négative.

7. Procédé de contrôle d'accès selon l'une des revendications 1 à 6, dans lequel la pluralité de valeurs d'attributs de ladite requête d'accès forme un premier ensemble de valeurs d'attributs, comportant en outre une étape (102) de mise en forme canonique dudit premier ensemble de valeurs d'attributs permettant d'obtenir un deuxième ensemble de valeurs d'attributs, et dans lequel la vérification (104) de correspondance en cache est appliquée sur le deuxième ensemble de valeurs d'attributs.

8. Programme d'ordinateur comportant des instructions logicielles qui, lorsqu'elles sont mises en œuvre par un dispositif de calcul, mettent en œuvre un procédé de contrôle d'accès à base de requêtes multi-attributs, pour l'accès à une partie d'un système informatique, selon l'une des revendications 1 à 7.

9. Système de contrôle d'accès à base de requêtes multi-attributs, pour un accès à une partie d'un système informatique, le contrôle d'accès permettant d'autoriser ou de refuser un accès à un émetteur de requête en fonction de valeurs d'attributs contenus dans une requête, le contrôle d'accès étant effectué en fonction d'une politique d'accès comportant un ensemble de règles préalablement mémorisé,
le système de contrôle d'accès comportant un système de cache de décisions (32), adapté à mémoriser des valeurs d'attributs de requêtes dans un cache et au moins un processeur de calcul configuré pour mettre en œuvre:
- une obtention d'une requête d'accès à une partie du système informatique, dite requête d'accès en cours de traitement, comportant une pluralité d'attributs ayant des valeurs d'attributs de requête,
- une vérification, à partir d'au moins un sous-ensemble de ladite pluralité d'attributs de la requête d'accès en cours de traitement, ayant des valeurs d'attributs de requête, de présence dans le cache de valeurs d'attributs issus de requêtes préalables et permettant d'obtenir une décision d'autorisation ou de refus d'accès à ladite partie du système informatique, la vérification comportant une comparaison de valeurs d'attributs de requête à des valeurs d'attributs mémorisés dans ledit système de cache de décisions (32) sous forme d'arbre de décision (50, 52, 54),
en cas de vérification positive, une autorisation ou refus d'accès à ladite partie du système informatique à partir dudit arbre de décision (50, 52, 54), et
le processeur de calcul est configuré pour mettre en œuvre en cas de vérification négative :
- une transmission de la requête d'accès en cours de traitement à un module de décision (15) configuré pour effectuer une évaluation de la politique d'accès (12) dans le contexte de ladite requête,
- une obtention d'une réponse comprenant une décision d'autorisation ou de refus d'accès en fonction dudit ensemble d'attributs ayant des valeurs d'attributs de requête, et comprenant au moins une information de mise à jour de l'arbre de décision du système de cache de décisions (32) et
- une mise à jour dudit arbre de décision en fonction de ladite au moins une information de mise à jour, ladite mise à jour comportant un ajout d'un nœud intermédiaire associé à un attribut indiqué dans ladite information de mise à jour et/ou un ajout d'une arête ayant pour valeur associée une valeur d'attribut de requête associé à un attribut indiqué dans ladite information de mise à jour et un ajout de nœud terminal associé à la décision d'autorisation ou de refus d'accès.

## Patentansprüche

1. Verfahren zur Zugriffssteuerung auf der Basis von Multiattribut-Anforderungen für einen Zugriff auf einen Teil eines Computersystems, wobei es die Zugriffssteuerung gestattet, einem Sender der Anforderung einen Zugriff in Abhängigkeit von Attributwerten zu gestatten oder zu verweigern, die in einer
Anforderung enthalten sind, wobei die Zugriffssteuerung durch ein Zugriffssteuerungssystem in Abhängigkeit von einer Zugriffspolitik (12) erfolgt, die eine zuvor gespeicherte Gesamtheit von Regeln umfasst, wobei das Zugriffssteuerungssystem ein Entscheidungs-Cache-System, das geeignet ist, Anforderungsattributwerte in einem Cache zu speichern, und mindestens einen Rechenprozessor aufweist, wobei das Verfahren die folgenden Schritte aufweist, die von einem Prozessor ausgeführt werden:
- Erhalten (100) einer Zugriffsanforderung auf einen Teil des Computersystems, bezeichnet als Zugriffsanforderung in Bearbeitung, die eine Vielzahl von Attributen mit Anforderungsattributwerten aufweist,
- Überprüfen (104), anhand von mindestens einer Teilmenge der Vielzahl von Attributen der Zugriffsanforderung in Bearbeitung mit Anforderungsattributwerten, des Vorhandenseins im Cache von Attributwerten, die aus vorherigen Anforderungen stammen und erlauben, eine Entscheidung über die Genehmigung oder Verweigerung des Zugriffs auf den Teil des Computersystems zu erhalten,
wobei die Überprüfung einen Vergleich von Anforderungsattributwerten mit Attributwerten umfasst, die in dem Entscheidungs-Cache-System (32) in Form eines Entscheidungsbaums (50, 52, 54) gespeichert sind,
im Falle einer positiven Überprüfung, Genehmigung oder Verweigerung des Zugriffs (108) auf den Teil des Computersystems anhand des Entscheidungsbaums (50, 52, 54), und
im Falle einer negativen Überprüfung, die Schritte:
- Weiterleiten (110) der Zugriffsanforderung in Bearbeitung an ein Entscheidungsmodul (15), das zur Durchführung einer Bewertung der Zugriffspolitik (12) im Kontext der Anforderung ausgelegt ist,
- Erhalten (118) einer Antwort, die eine Entscheidung über die Genehmigung oder Verweigerung des Zugriffs in Abhängigkeit von der Gesamtheit von Attributen mit Anforderungsattributwerten umfasst und mindestens eine Information über die Aktualisierung des Entscheidungsbaums des Entscheidungs-Cache-Systems (32) umfasst, und
- Aktualisieren (120) des Entscheidungsbaums in Abhängigkeit von der mindestens einen Aktualisierungsinformation, wobei die Aktualisierung ein Hinzufügen eines Zwischenknotens, der einem in der Aktualisierungsinformation angegebenen Attribut zugeordnet ist, und/oder ein Hinzufügen einer Kante, deren zugeordneter Wert ein Anforderungsattributwert ist, der einem in der Aktualisierungsinformation angegebenen Attribut zugeordnet ist, und ein Hinzufügen eines Endknotens, der der Entscheidung über die Genehmigung oder Verweigerung des Zugriffs zugeordnet ist, aufweist.

2. Verfahren zur Zugriffssteuerung nach Anspruch 1, wobei die mindestens eine Aktualisierungsinformation mindestens eine Liste von Attributen umfasst, Teilmenge der Attribute der Zugriffsanforderung in Bearbeitung, die tatsächlich für die Bewertung der Zugriffspolitik (12) durch das Entscheidungsmodul (15) verwendet werden.

3. Verfahren zur Zugriffssteuerung nach einem der Ansprüche 1 oder 2, wobei jeder in dem Entscheidungs-Cache-System (32) gespeicherte Entscheidungsbaum (50, 52, 54) einen Wurzelknoten (60) umfasst, der einem Attribut zugeordnet ist, das verwendet wird, um einen Zugriff gemäß der zuvor gespeicherten Zugriffspolitik (12) zu gestatten oder zu verweigern, mindestens einen Endknoten (62, 70, 78), der für eine Entscheidung zur Genehmigung oder Verweigerung des Zugriffs repräsentativ ist, und mindestens eine Kante (64, 72), die den Wurzelknoten (60) mit einem Zwischenknoten (66) oder einem Endknoten (62) verbindet, wobei die Kante einem Wert des dem Wurzelknoten (60) zugeordneten Attributs zugeordnet ist.

4. Verfahren zur Zugriffssteuerung nach Anspruch 3, wobei mindestens ein gespeicherter Entscheidungsbaum (52, 54) ferner mindestens einen Zwischenknoten (66, 68) zwischen dem Wurzelknoten (60) und einem Endknoten (70, 78) aufweist, wobei der Zwischenknoten einem Attribut zugeordnet ist, das verwendet wird, um einen Zugriff gemäß der zuvor gespeicherten Zugriffspolitik (12) zu gestatten oder zu verweigern, wobei der Zwischenknoten (66, 68) eine zugeordnete Tiefenstufe aufweist, wobei der Zwischenknoten (66, 68) über eine erste Kante (72, 74) mit einem Elternknoten (60, 66) verbunden ist, wobei der Elternknoten der Wurzelknoten (60) oder ein Eltern-Zwischenknoten (66) mit einer niedrigeren Tiefenstufe ist, und über eine zweite Kante (74, 76, 80) mit mindestens einem Kindknoten (68, 70, 78), wobei der Kindknoten (68, 70, 78) ein Endknoten (70, 78) oder ein Kind-Zwischenknoten (68) mit einer höheren Tiefenstufe ist, wobei die erste Kante (72, 74) dem Wert des Attributs zugeordnet ist, das dem Elternknoten (60, 66) zugeordnet ist, und die zweite Kante (74, 76, 80) einem Wert des Attributs zugeordnet ist, das dem Zwischenknoten (66, 68) zugeordnet ist.

5. Verfahren zur Zugriffssteuerung nach Anspruch 4, wobei die Überprüfung in einer aufsteigenden Reihenfolge der Tiefenstufen des Entscheidungsbaums für jede Tiefenstufe aufweist:
- eine Auswahl eines aktuellen Knotens mit einem zugehörigen aktuellen Attribut,
- ein Erhalten des Werts oder der Werte des entsprechenden Attributs in der Zugriffsanforderung in Bearbeitung und einen Vergleich des Werts mit jedem Attributwert, der einer Kante zugeordnet ist, die den aktuellen Knoten mit einem Kindknoten verbindet,
und im Falle eines positiven Vergleichs Auswahl des Kindknotens als aktueller Knoten und, wenn der aktuelle Knoten ein Endknoten ist, Erhalten der Entscheidung, ob der Zugriff gestattet oder verweigert wird, die dem besagten Endknoten zugeordnet ist.

6. Verfahren zur Zugriffssteuerung nach Anspruch 5, wobei, wenn wenn sich für eine Tiefenstufe der Attributwert der Anforderung in Bearbeitung von jedem Attributwert unterscheidet, der einer Kante zugeordnet ist, die den aktuellen Knoten mit einem Kindknoten verbindet, die Überprüfung negativ ist.

7. Verfahren zur Zugriffssteuerung nach einem der Ansprüche 1 bis 6, wobei die Vielzahl von Attributwerten der Zugriffsanforderung eine erste Gesamtheit von Attributwerten bildet, ferner einen Schritt (102) zur kanonischen Formatierung der ersten Gesamtheit von Attributwerten aufweist, der es gestattet, eine zweite Gesamtheit von Attributwerten zu erhalten, und wobei die Überprüfung (104) der Cache-Übereinstimmung auf die zweite Gesamtheit von Attributwerten angewendet wird.

8. Computerprogramm, das Softwareanweisungen aufweist, die, wenn sie von einer Rechenvorrichtung ausgeführt werden, ein Verfahren zur Zugriffssteuerung auf der Basis von Multiattribut-Anforderungen für den Zugriff auf einen Teil eines Computersystems nach einem der Ansprüche 1 bis 7 ausführen.

9. System zur Zugriffssteuerung auf der Basis von Multiattribut-Anforderungen für einen Zugriff auf einen Teil eines Computersystems, wobei es die Zugriffssteuerung gestattet, einen Zugriff auf einen Sender der Anforderung in Abhängigkeit von in einer Anforderung enthaltenen Attributwerten zu gestatten oder zu verweigern, wobei die Zugriffssteuerung in Abhängigkeit von einer Zugriffspolitik durchgeführt wird, die eine zuvor gespeicherte Gesamtheit von Regeln aufweist,
wobei das System zur Zugriffssteuerung ein Entscheidungs-Cache-System (32) aufweist, das geeignet ist, Anforderungsattributwerte in einem Cache zu speichern, und mindestens einen Rechenprozessor aufweist, der ausgelegt ist, um Folgendes durchzuführen:
- Erhalten einer Zugriffsanforderung auf einen Teil des Computersystems, welche als Zugriffsanforderung in Bearbeitung bezeichnet wird, die eine Vielzahl von Attributen mit Anforderungsattributwerten aufweist,
- Überprüfung, anhand von mindestens einer Teilmenge der Vielzahl von Attributen der Zugriffsanforderung in Bearbeitung mit Anforderungsattributwerten, des Vorhandenseins im Cache von Attributwerten, die aus vorherigen Anforderungen stammen und erlauben, eine Entscheidung über die Genehmigung oder Verweigerung des Zugriffs auf den Teil des Computersystems zu erhalten, wobei die Überprüfung einen Vergleich von Anforderungsattributwerten mit Attributwerten aufweist, die in dem Entscheidungs-Cache-System (32) in Form eines Entscheidungsbaums (50, 52, 54) gespeichert sind,
im Falle einer positiven Überprüfung, Genehmigung oder Verweigerung des Zugriffs auf den Teil des Computersystems anhand des Entscheidungsbaums (50, 52, 54), und
der Rechenprozessor so ausgelegt ist, dass er im Falle einer negativen Überprüfung
Folgendes durchführt:
- eine Weiterleitung der Zugriffsanforderung in Bearbeitung an ein Entscheidungsmodul (15), das zur Durchführung einer Bewertung der Zugriffspolitik (12) im Kontext der Anforderung ausgelegt ist,
- ein Erhalten einer Antwort, die eine Entscheidung über die Genehmigung oder Verweigerung des Zugriffs in Abhängigkeit von der Gesamtheit von Attributen mit Anforderungsattributwerten umfasst und mindestens eine Information über die Aktualisierung des Entscheidungsbaums des Entscheidungs-Cache-Systems (32) umfasst, und
- eine Aktualisierung des Entscheidungsbaums in Abhängigkeit von der mindestens einen Aktualisierungsinformation, wobei die Aktualisierung ein Hinzufügen eines Zwischenknotens, der einem in der Aktualisierungsinformation angegebenen Attribut zugeordnet ist, und/oder ein Hinzufügen einer Kante, deren zugeordneter Wert ein Anforderungsattributwert ist, der einem in der Aktualisierungsinformation angegebenen Attribut zugeordnet ist, und ein Hinzufügen eines Endknotens, der der Entscheidung über die Genehmigung oder Verweigerung des Zugriffs zugeordnet ist, aufweist.

## Claims

1. An access control method based on multi-attribute requests, for access to a part of a computer system, the access control making it possible to authorise or deny access to a request sender as a function of attribute values contained in a
request, with access control carried out by an
access control system as a function of an access policy (12) comprising a previously stored set of rules, the access control system comprising a decision cache system adapted to store request attribute values in a cache and at least one calculation processor, the method comprising the following steps, implemented by a processor:
- obtaining (100) a request for access to a part of the computer system, referred to as an access request being processed, comprising a plurality of attributes having request attribute values,
- verifying (104) the presence in the cache, on the basis of at least one subset of said plurality of attributes of the access request being processed, having values of request attributes, of values of attributes resulting from prior requests and making it possible to obtain a decision to authorise or deny access to said part of the computer system,
the verification comprising a comparison of query attribute values with attribute values stored in said decision cache system (32) in the form of a decision tree (50, 52, 54),
in the event of successful verification, authorising or denying access (108) to said part of the computer system on the basis of the said decision tree (50, 52, 54), and
in the event of unsuccessful verification; steps of:
- transmitting (110) the access request being processed to a decision module (15) configured to perform an evaluation of the access policy (12) in the context of said request,
- obtaining (118) a response comprising an access authorisation or denial decision as a function of said set of attributes having request attribute values, and comprising at least one item of information regarding the updating of the decision tree of the decision cache system (32), and
- updating (120) of said decision tree as a function of said at least one update information, said updating comprising an addition of an intermediate node associated with an attribute indicated in said update information and/or an addition of an edge whose associated value is a request attribute value associated with an attribute indicated in said update information and an addition of a terminal node associated with the access authorisation or denial decision.

2. The access control method according to claim 1, in which said at least one update information item comprises at least one list of attributes, a sub-set of the attributes of the access request being processed which are actually used for the evaluation of the access policy (12) by the decision module (15).

3. The access control method according to one of claims 1 or 2, wherein each decision tree (50, 52, 54) stored in said decision cache system (32) comprises a root node (60) associated with an attribute used to authorise or deny access according to the access policy (12) previously stored, at least one terminal node (62, 70, 78) representative of an access authorisation or denial decision, and at least one edge (64, 72) linking said root node (60) to an intermediate node (66) or to a terminal node (62), said edge being associated with a value of the attribute associated with the root node (60).

4. The access control method according to claim 3, wherein at least one stored decision tree (52, 54) further comprises at least one intermediate node (66, 68) between said root node (60) and a terminal node (70, 78), the intermediate node being associated with an attribute used to authorise or deny access according to the previously stored access policy (12), the intermediate node (66, 68) having an associated depth level, the intermediate node (66, 68) being connected by a first edge (72, 74) to a parent node (60, 66), said parent node being the root node (60) or a parent intermediate node (66) of lower depth level and by a second edge (74, 76, 80) to at least one child node (68, 70, 78), said child node (68, 70, 78) being a terminal node (70, 78) or an intermediate child node (68) at a greater depth level, said first edge (72, 74) being associated with the value of the attribute associated with the parent node (60, 66), said second edge (74, 76, 80) being associated with a value of the attribute associated with said intermediate node (66, 68).

5. The access control method according to claim 4, wherein said verification comprises, in an ascending order of the depth levels of the decision tree, for each depth level:
- selecting a current node with an associated current attribute,
- obtaining the value or values of the corresponding attribute in the access request being processed and comparing said value with each attribute value associated with an edge linking said current node to a child node,
and in the event of a positive comparison, selecting said child node as the current node, and if the current node is a terminal node, obtaining the access authorisation or denial decision associated with said terminal node.

6. The access control method according to claim 5, wherein, if, for a depth level, the attribute value of the query being processed is different from each attribute value associated with an edge linking said current node to a child node, said verification is unsuccessful.

7. The access control method according to one of claims 1 to 6, wherein the plurality of attribute values of said access request form a first set of attribute values, further comprising a step (102) of canonically formatting said first set of attribute values making it possible to obtain a second set of attribute values, and wherein the cache match verification (104) is applied to the second set of attribute values.

8. A computer program comprising software instructions which, when implemented by a computing device, implement an access control method based on multi-attribute requests, for access to a part of a computer system, according to one of claims 1 to 7.

9. An access control system based on multi-attribute requests, for access to a part of a computer system, the access control making it possible to authorise or deny access to a request sender as a function of attribute values contained in a request, the access control being carried out as a function of an access policy comprising a set of previously stored rules,
the access control system comprising a decision cache system (32), adapted to store request attribute values in a cache and at least one calculation processor configured to:
- obtain a request for access to a part of the computer system, referred to as an access request being processed, comprising a plurality of attributes having request attribute values,
- verify the presence in the cache, on the basis of at least one subset of said plurality of attributes of the access request being processed, having values of request attributes, of values of attributes resulting from prior requests and making it possible to obtain a decision authorising or denying access to said part of the computer system, the verification comprising a comparison of values of request attributes with values of attributes stored in said decision cache system (32) in the form of a decision tree (50, 52, 54),
in the event of successful verification, authorise or deny access to said part of the computer system on the basis of said decision tree (50, 52, 54), and
the calculation processor is configured, in the event of unsuccessful verification, to:
- transmit the access request being processed to a decision module (15) configured to perform an evaluation of the access policy (12) in the context of said request,
- obtain a response comprising an access authorisation or refusal decision as a function of said set of attributes having request attribute values, and comprising at least one item of information regarding the updating of the decision tree of the decision cache system (32), and
- update said decision tree as a function of said at least one item of information regarding the updating, said updating comprising an addition of an intermediate node associated with an attribute indicated in said item of information regarding the updating and/or an addition of an edge whose associated value is a request attribute value associated with an attribute indicated in said item of information regarding the updating and an addition of a terminal node associated with the access authorisation or denial decision.
